Europäisches Patentamt

European Patent Office

Office européen des brevets

(11) Veröffentlichungsnummer: **0 278 417 B1**

# (12) EUROPÄISCHE PATENTSCHRIFT

(45) Veröffentlichungstag der Patentschrift: **21.11.91**

(51) Int. Cl.⁵: **F16K 41/10**, F16J 15/52

(21) Anmeldenummer: **88101671.1**

(22) Anmeldetag: **05.02.88**

---

(54) **Stopfbuchslose Abdichtung einer mit einer Schaltwelle versehenen Dreharmatur.**

---

(30) Priorität: **11.02.87 DE 3704251**

(43) Veröffentlichungstag der Anmeldung:
**17.08.88 Patentblatt 88/33**

(45) Bekanntmachung des Hinweises auf die
Patenterteilung:
**21.11.91 Patentblatt 91/47**

(84) Benannte Vertragsstaaten:
**AT BE CH ES FR GB IT LI NL SE**

(56) Entgegenhaltungen:
**EP-A- 0 151 841**
**EP-A- 0 180 903**
**FR-A- 1 482 916**
**GB-A- 577 699**
**US-A- 4 159 818**

(73) Patentinhaber: **Richter Chemie-Technik GmbH**
**Industriestrasse 2 Postfach 609**
**W-4152 Kempen 1/Ndrh.(DE)**

(72) Erfinder: **Wienen, Kurt**
**Schillerstrasse 15**
**W-4172 Straelen 1(DE)**
Erfinder: **Wyen, Dieter**
**Marienkirchstrasse 12**
**W-4052 Korschenbroich(DE)**
Erfinder: **Hatting, Paul**
**Tümpweg 15**
**W-4152 Kempen(DE)**

(74) Vertreter: **Dr. Fuchs, Dr. Luderschmidt**
**Dipl.-Phys. Seids, Dr. Mehler Patentanwälte**
**Abraham-Lincoln-Strasse 7**
**W-6200 Wiesbaden(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft eine stopfbuchslose Abdichtung einer mit einer Schaltwelle versehenen Dreharmatur gemäß dem Oberbegriff von Anspruch 1 bzw. von Anspruch 7.

Bisher wurden Dreh- oder Schwenkarmaturen (wie z.B. Kugelhähne, Kükenhähne oder Klappen) im Bereich der Schaltwellendurchführung mittels einer Stopfbuchse, mit O-Ringen oder mit speziell geformten Dichtelementen, die O-Ring-artig funktionieren, abgedichtet.

Beim Einsatz von Absperrarmaturen für hochaggressive, toxische und ätzende Medien sind Armaturen mit vorwiegend Fluorkunststoff-Auskleidung im Einsatz. Hier haben sich Hubventile mit einer stopfbuchslosen Faltenbalgabdichtung als beste Konstruktion bewährt. Eine stopfbuchslose Abdichtung auch für Dreharmaturen wird durch die Forderungen der chemischen Industrie an eine sichere Abgrenzung dieser aggressiven Medien gegen die Außenwelt immer dringender. Auch eine noch so gute Stopfbuchskonstruktion bleibt immer mit einem Risiko des Undichtwerdens behaftet und kann sicherlich auch die immer strenger werdenden gesetzlichen Vorschriften bald nicht mehr erfüllen.

Aus der EP-A-0 180 903 ist eine hermetisch dichte Wellendurchführung für Schwenk- und Drehbewegungen bekannt. Der treibenden Teil der zweigeteilten Schaltwelle ist mit der angetriebenen Schaltwelle über ein Umschlußpaar verbunden, das eine Dichtkappe aufweist, an dem das untere Ende eines zylindrisch ausgebildeten Faltenbalges befestigt ist. Das obere Ende des Faltenbalges ist am Gehäuse fixiert. Diese Abdichtung benötigt neben dem Faltenbalg noch weitere Bauteile, die die Herstellung der Abdichtung verteuern.

In der EP-A-0 151 841 wird ein Ventil beschrieben, das über eine zweigeteilte Schaltwelle betätigt wird. Der untere Teil der Schaltwelle steckt in einem vorzugsweise aus Metall gefertigten balgförmigen Abdichtelement, an dem eine Kappe oder Buchse angeschweißt ist, an der von außen der obere Teil der Schaltwelle angreift. Da der Balg den Schaltwellenteil umschließt und aus Stabilitätsgründen dicht an dem Schaltwellenteil anliegt, treten u.U. Reibungsprobleme auf. Ein weiterer Nachteil besteht darin, daß bei 90° Drehungen aufgrund der Faltenanordnung und Faltenausgestaltung sowie der Materialwahl relativ große Kräfte benötigt werden.

Aufgabe der Erfindung ist daher eine Abdichtung für Dreh- oder Schwenkarmaturen zu schaffen, die ohne Stopfbuchsen auskommt, eine sichere Abgrenzung hochaggressiver Medien bei gleichzeitig einfachem Aufbau erlaubt und eine leichtgängige Schwenkübertragung von mindestens 90° zuläßt.

Diese Aufgabe wird mit den kennzeichnenden Merkmalen des Anspruchs 1 bzw. alternativ dazu mit den kennzeichnenden Merkmalen von Anspruch 7 gelöst.

Um für den Einsatz in hochaggressiven Medien geeignet zu sein, ist das Formteil aus einem Fluorkunststoff wie z.B. PTFE, PFA, TFA, FEP hergestellt.

Bei beiden Alternativlösungen besteht einer der Vorteile darin, daß zur Abdichtung nur ein Bauteil benötigt wird, da sowohl in die Membran als auch in den Balg einer Buchse eingeformt ist, in die eine der beiden Teile der Schaltwelle eingreift.

Bei der Membran-Ausführungsform wird durch die Anordnung der Falten zwischen der Buchse und dem eingespannten Rand der Membran eine kompakte Bauweise erzielt.

Die Schaltwelle wird besonders leichtgängig durch die Anordnung und Ausgestaltung der Falten. Bei der Balgausführungsform ist das Formteil in seinem oberen Abschnitt mit sternförmig um die Zylinderachse angeordneten Längsfalten und im unteren Abschnitt mit Querfalten versehen. Eine andere bevorzugte Ausführungsform sieht wendelförmig angeordnete Falten vor.

Nachfolgend werden beispielhafte Ausführungsformen der Erfindung anhand der Zeichnung näher erläutert.

Es zeigen

Fig. 1    einen Schnitt durch Formteil, Gehäuse und exzentrischer Schaltwelle

Fig. 2    eine Untersicht auf das Formteil längs der Linie G-G der Fig. 1

Fig. 3    eine Draufsicht auf das Formteil längs der Linie A-F der Fig. 1

Fig. 4    eine Draufsicht auf das Formteil gemäß einer weiteren Ausführungsform mit sternförmig angeordneten Falten

Fig. 5    einen Schnitt nach A-A der Fig. 4

Fig. 6    einen Schnitt nach B-B der Fig. 4

Fig. 7    einen Schnitt durch Formteil und Gehäuse gemäß einer weiteren Ausführungsform

Fig. 8    eine Draufsicht längs der Linie B-B in Fig. 7

Fig. 9    einen Schnitt durch Formteil und Gehäuse gemäß einer weiteren Ausführungsform

Fig. 10   eine Draufsicht längs der Linie B-B in Fig. 9

Fig. 11   einen Schnitt durch Formteil und Gehäuse gemäß einer weiteren Ausführungsform

Fig. 12   einen Schnitt durch die wendelförmigen Falten.

Bei allen Ausführungsformen sind in den Figuren die Übertragungsanschlüsse des Formteils oben und unten in ihrer Form nicht festgelegt, sondern richten sich jeweils nach den Erfordernissen der Armatur bzw. der entsprechenden Nennweite. Dies gilt auch für die eingespannten äußeren Durchmesser der Formteile.

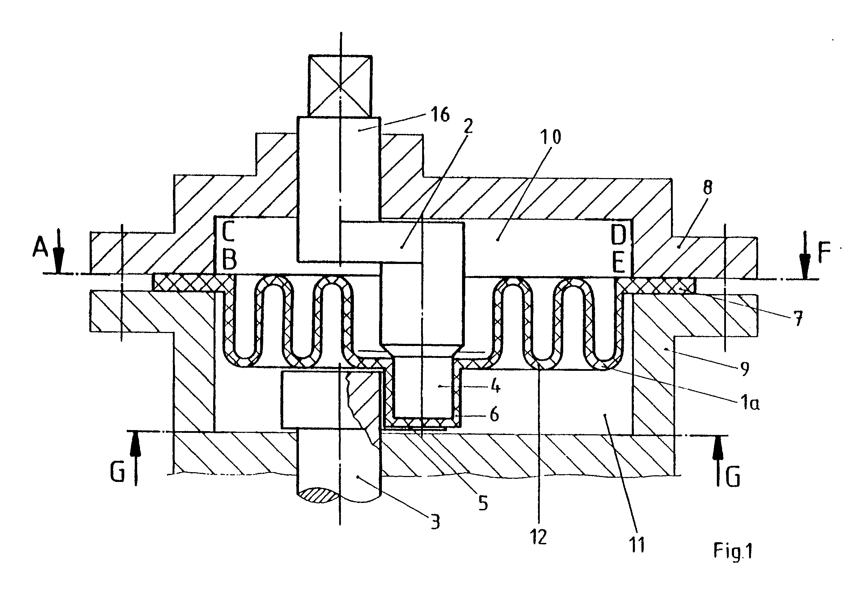

Fig. 1 zeigt einen Querschnitt des erfindungsgemäßen Formteiles 1a, das als Membran mit wellenförmigen Falten 12 ausgeführt ist. Über eine Schwenkbewegung des exzentrischen Schaltteiles 2 wird die Exzentergabel 5 des Teiles 3 geschaltet. Zwischen dem kraftübertragenden Zapfen 4 und der Gabel 5 befindet sich eine geschlossene Buchse 6 des Formteils 1, in die dieser Zapfen drehfest eingesetzt ist. Da das Formteil 1 vorteilhafterweise aus dem Fluorkunststoff PTFE gefertigt ist, ist die Reibung zwischen Zapfen 4, geschlossener Buchse 6 und Gabel 5 minimiert.

Der Rand 7 des Formteiles 1a wird zwischen dem oberen 8 und dem unteren Flansch 9 eingeklemmt und trennt damit trotz der Schwenkübertragung die beiden Kammern 10 und 11 stopfbuchslos hermetisch voneinander ab.

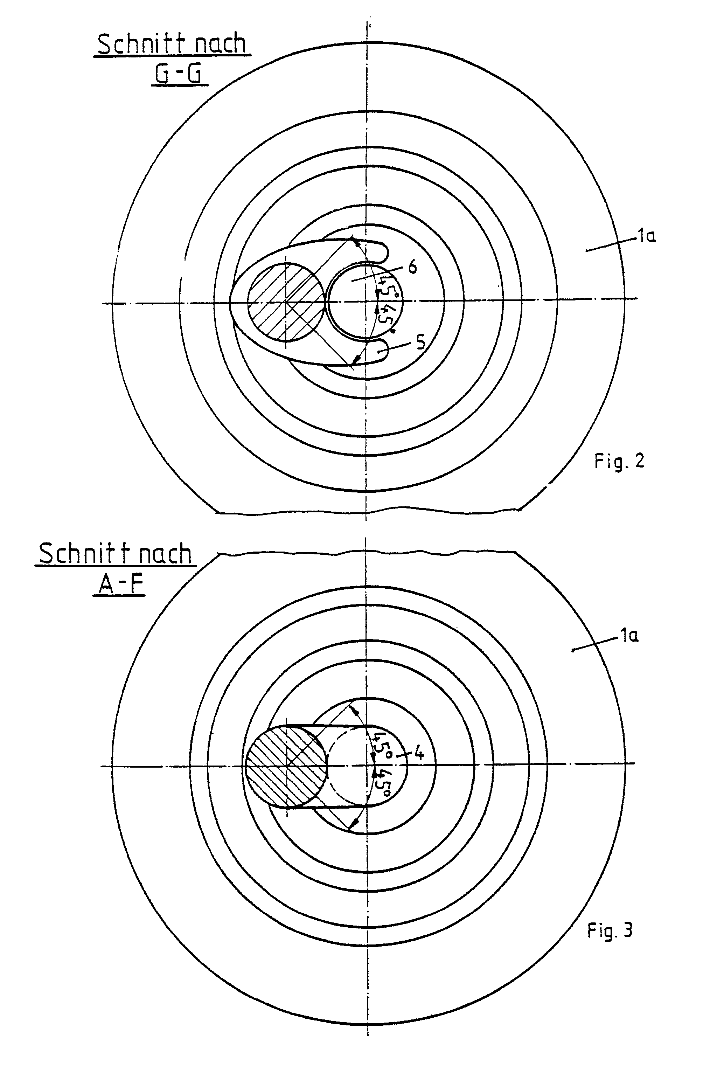

Fig. 2 und Fig. 3 sind Untersicht und Draufsicht auf das Formteil 1b dargestellt. Bei einer Schwenkbewegung um beispielsweise 45° nach links und 45° nach rechts, wie in Fig. 3 eingezeichnet ist, ergibt sich eine nutzbare gesamte Schwenkbewegung von 90°.

Die zwischen dem eingeklemmten Rand 7 und der Buchse 6 angeordneten wellenförmigen konzentrischen Falten 12 machen diese Schwenkbewegung mit, indem sie sich aus der zentrischen Mitte bewegen und nach der Bewegung eine exzentrische Stellung einnehmen. Dabei werden die in Schwenkrichtung liegenden Falten zusammengeschoben und die hinter der Schwenkrichtung liegenden Falten werden auseinandergezogen. Eine Verdrehung der Buchse 6 findet nicht statt.

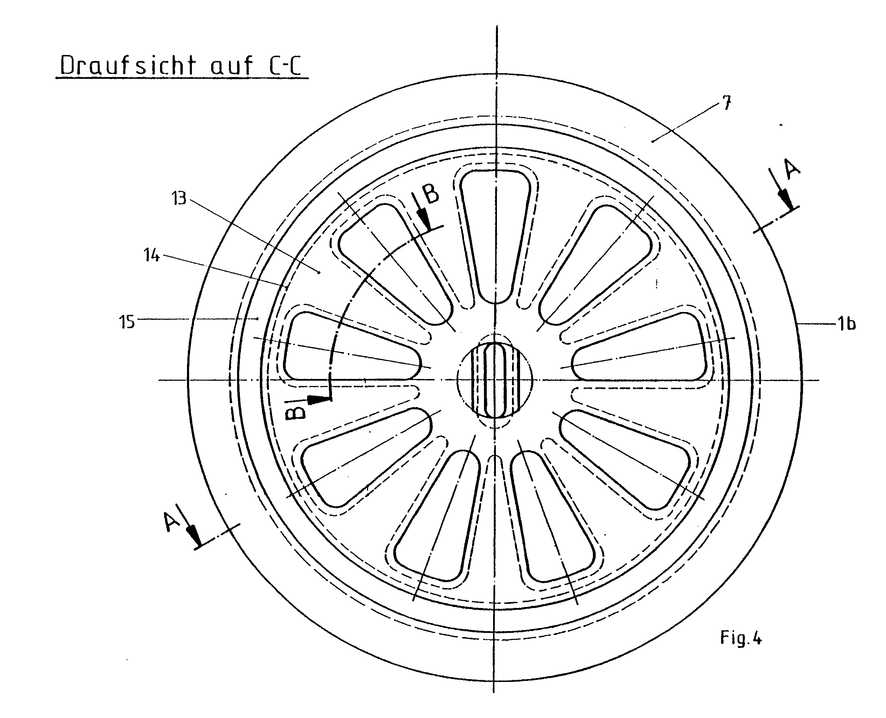

Fig. 4 zeigt eine Draufsicht des Formteiles 1b in der Ausführungsform als Membran, in der die sternförmige Ausbildung der Verdreh-Falten 13 und die den Durchmesser ausgleichende Ringfalte 15 zu erkennen sind.

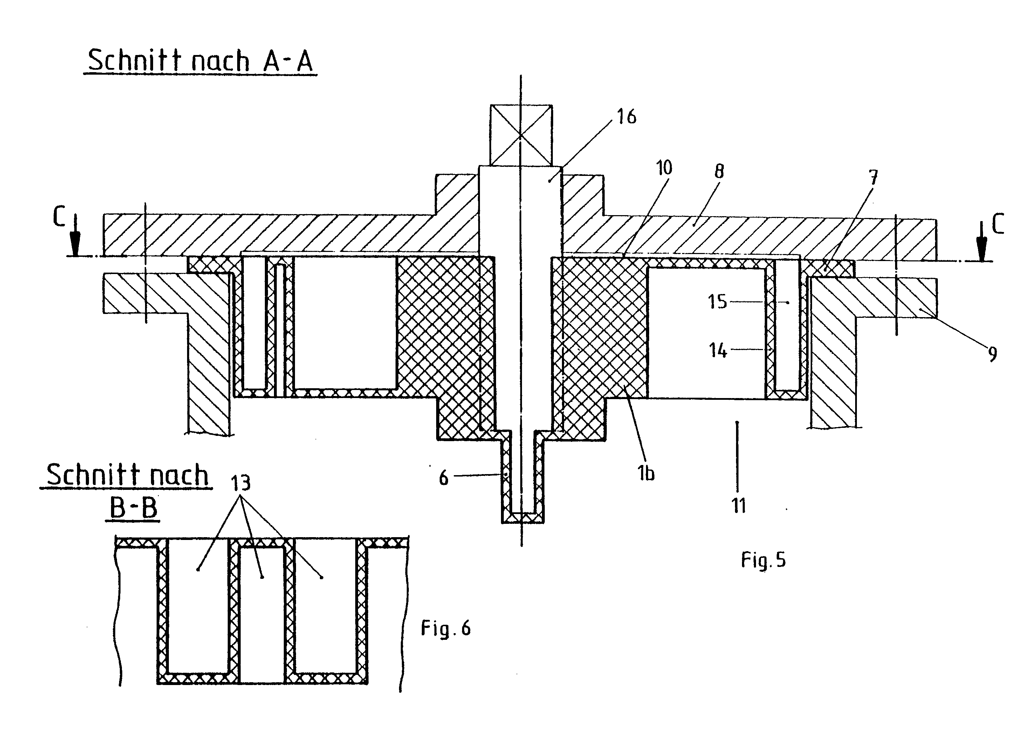

Fig. 5 zeigt einen Querschnitt des erfindungsgemäßen Formteils 1b längs A-A der Fig. 4. Der äußere Rand 7 des Formteils ist zwischen den Flanschen 8 und 9 eingeklemmt und trennt den Raum 10 vom unteren Raum 11 stopfbuchslos ab.

Die sternförmigen Falten 13 (Querschnitt s. Fig. 6) lassen eine Verdrehung der Schaltwelle 16, die mit ihrem oberen Teil 2 in die Buchse 6 eingesetzt ist, um 45° nach links und rechts zu. Bei dieser Drehung wird der äußere Durchmesser 14 der Sternfalten 13 zusammengezogen. Diese Bewegung wird durch die äußere Ringfalte 15 ermöglicht, da diese die Durchmesserverringerung durch ein Öffnen ihrerseits ausgleicht.

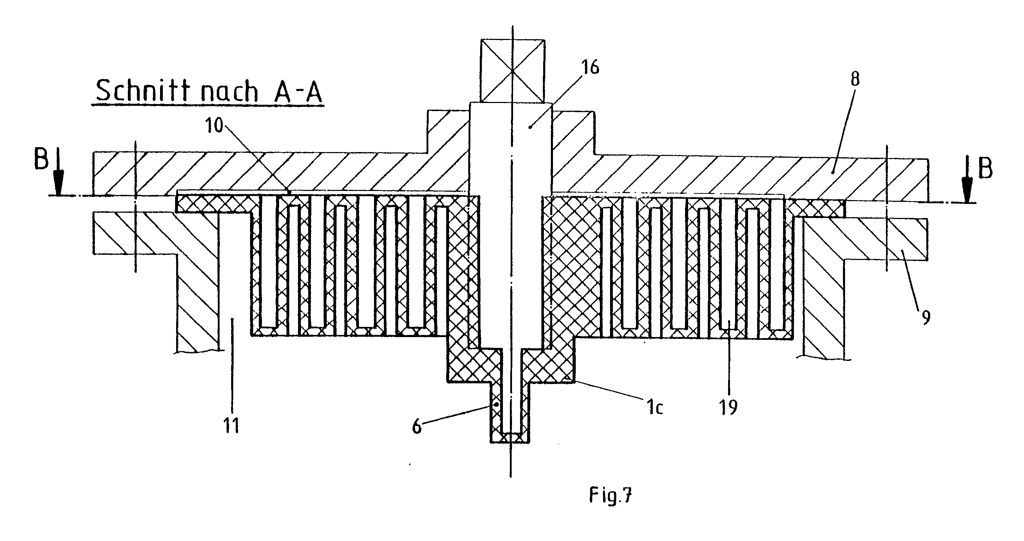

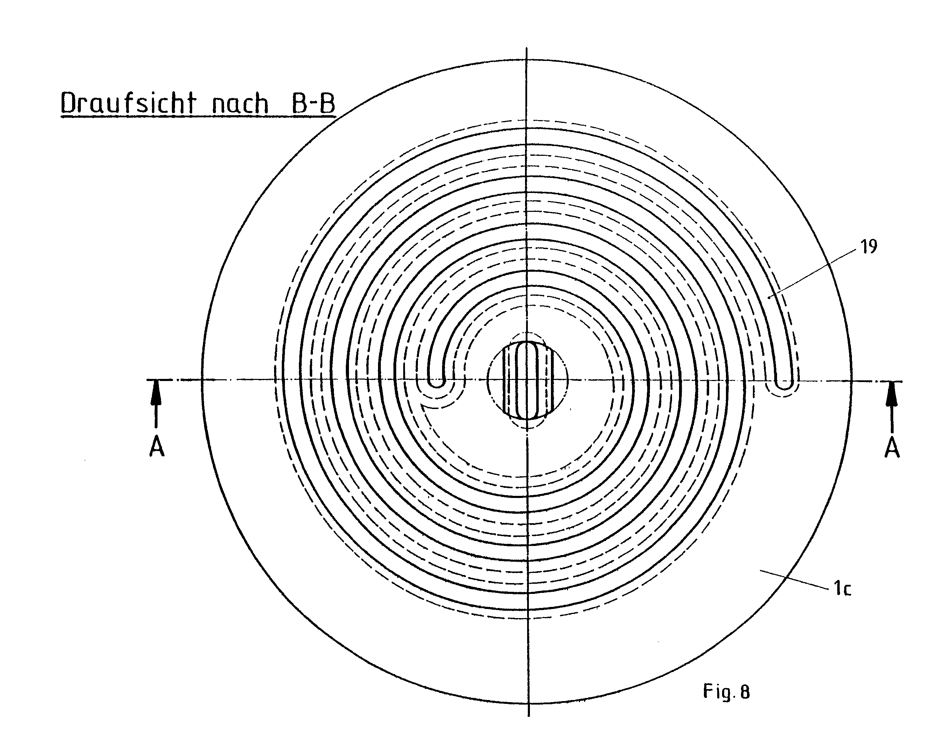

Fig. 7 zeigt einen Querschnitt des Formteiles 16 in der Ausführungsform als Membran mit wellenförmigen Falten 19, die in Draufsicht (Fig. 8) die Form einer Spirale aufweisen. Die Funktion dieser Falten 19 entspricht der Arbeitsweise einer Uhrfeder.

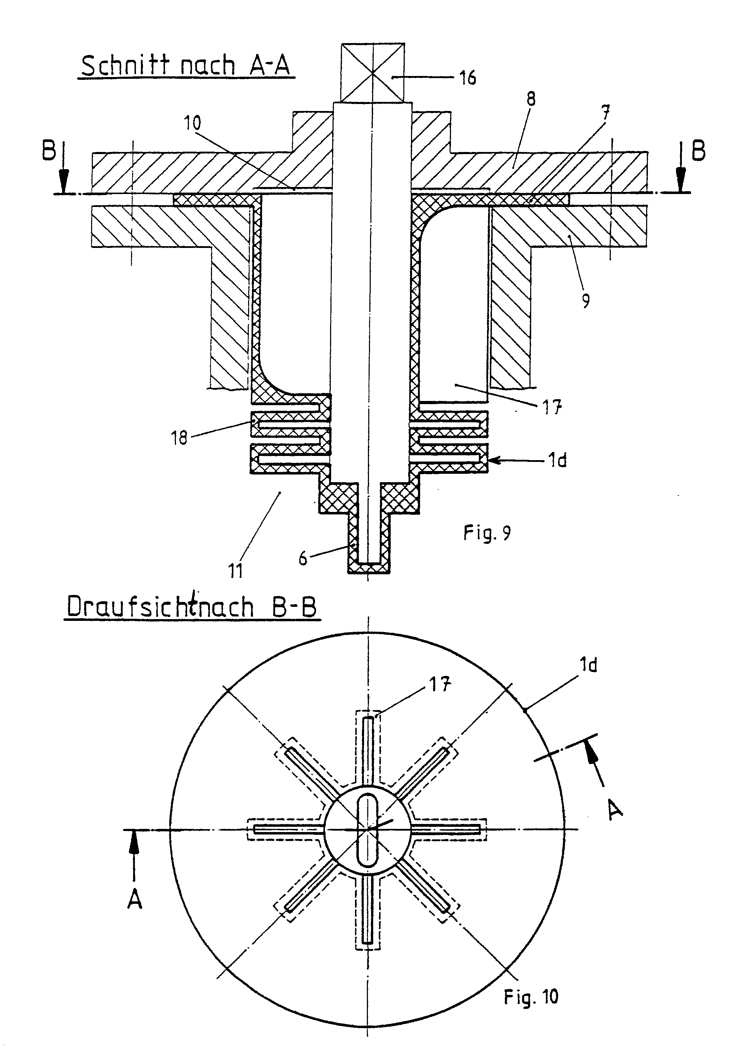

Fig. 9 zeigt einen Querschnitt des erfindungsgemäßen balgförmigen Formteils 1d. Der äußere Rand 7 des zylinderförmigen Formteiles 1d ist zwischen den Flanschen 8 und 9 eingeklemmt und trennt den Raum 10 vom unteren Raum 11 stopfbuchslos ab. Die sternförmig angeordneten Längsfalten 17 im oberen Abschnitt des Formteils 1d (Draufsicht s. Fig. 10) lassen eine Verdrehung der Schaltwelle 16 um 45° nach links und rechts zu. Bei dieser Drehung werden die Längsfalten 17 gewindeförmig verwunden. Dadurch verkürzt sich die Falte 17. Diese Verkürzung kann, falls erforderlich, durch die Querfalten 18 im unteren Abschnitt, der auch die Buchse 6 enthält, ausgeglichen werden.

Fig. 10 zeigt eine Draufsicht des Formteiles 1d, in dem die sternförmige Ausbildung der Vordrehfalten 17 zu erkennen ist.

Die Falten können wegen der besseren Verdrehbarkeit auch schräg- bis schneckenförmig ausgeführt sein.

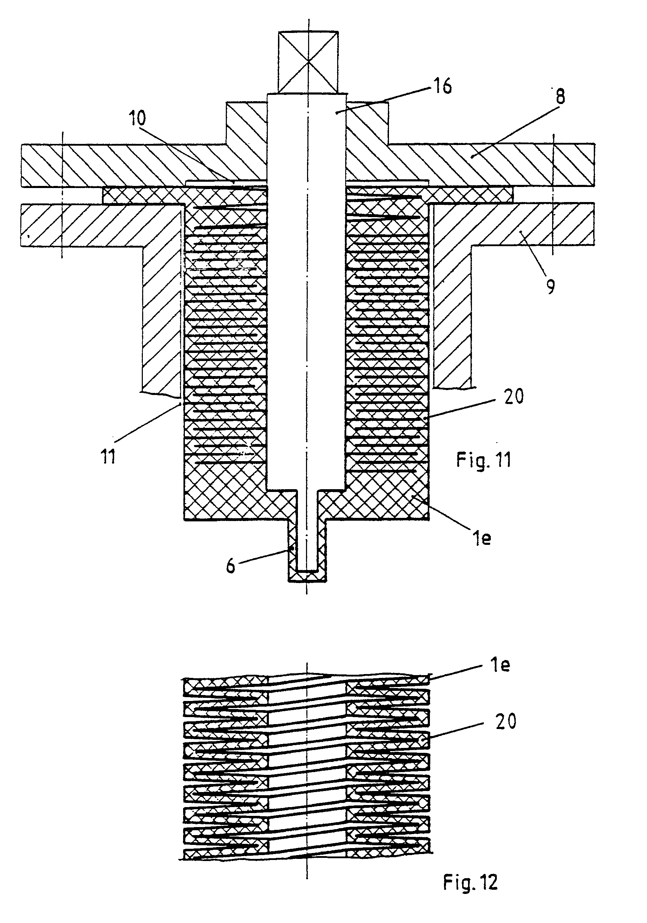

Fig. 11 zeigt einen Querschnitt des balgförmigen Formteiles 1e. Der verdrehbare Teil des Faltenbalges 1e besteht aus einer axial angeordneten, wendelförmigen Falte 20, die eine Übertragung einer Schwenkbewegung zuläßt. Die durch die Bewegung auftretenden Torsionsspannungen werden auf die gesamte wendelförmige Falte 20 übertragen und bedeuten keine große Materialbelastung.

Fig. 12 zeigt die Falte 20 so wie sie gefertigt wird. Durch eine verschieden große Steigung der Wendel sowie unterschiedliche Ausführung der Falte 20 in Form und Wandstärke kann der Drehbalg wahlweise flexibel oder steifer ausgeführt werden und damit einer unterschiedlichen Beanspruchung bei Druck- und Temperaturbelastung angeglichen werden.

Im Einbauzustand kann der Drehbalg zusammengeschoben werden; dadurch wird die Belastbarkeit gegen Druck, Temperatur, Torsion und Diffusion erhöht.

## Patentansprüche

1. Stopfbuchslose Abdichtung einer mit einer aus zwei Teilen bestehenden Schaltwelle (16) versehenen Dreharmatur, die aus einem elastischen flüssigkeitsdichten in Draufsicht kreisförmige Gestalt aufweisenden Formteil (1a, 1b, 1c) besteht, das einen Rand (7) aufweist, der zwischen zwei Flanschen (8, 9) des Gehäuses eingeklemmt ist, das eine geschlossene Buchse (6) aufweist, in die eines der Teile der Schaltwelle drehfest eingesetzt ist, und das an geeigneten Stellen und in geeigneter Weise mit Falten (12, 13, 15, 19) derart versehen ist, daß das Formteil zu einer zumindest partiellen Drehbewegung befähigt ist, dadurch gekennzeichnet,

daß das Formteil aus einer Membran (1a, 1b, 1c) besteht und

daß die Falten (12, 13, 15, 19) in radialer Richtung zwischen der Buchse (6) und dem eingespannten Rand (7) angeordnet sind.

2. Abdichtung nach Anspruch 1, dadurch gekennzeichnet, daß dieses Formteil (1a, 1b, 1c) aus einem Fluorkunststoff hergestellt ist.

3. Abdichtung nach einem der Ansprüche 1 oder 2, dadurch gekennzeichnet, daß das Formteil (1a bzw. 1c) wellenförmige Falten (12 bzw. 19) aufweist.

4. Abdichtung nach Anspruch 3, dadurch gekennzeichnet, daß in diese Buchse (6) ein Zapfen (4) eines exzentrischen Schaltteils (2) der Schaltwelle (16) eingesetzt ist.

5. Abdichtung nach Anspruch 3, dadurch gekennzeichnet, daß die Falten (19) in Draufsicht in Form einer Spirale angeordnet sind.

6. Abdichtung nach Anspruch 2, dadurch gekennzeichnet, daß das Formteil (1b) in Draufsicht sternförmige Falten (13) sowie eine äußere Ringfalte (15) aufweist.

7. Stopfbuchslose Abdichtung einer mit einer aus zwei Teilen bestehenden Schaltwelle (16) versehenen Dreharmatur, die aus einem elastischen flüssigkeitsdichten in Draufsicht kreisförmige Gestalt aufweisenden Formteil (1d, 1e) besteht, das einen Rand (7) aufweist, der zwischen zwei Flanschen (8, 9) des Gehäuses eingeklemmt ist, das eine geschlossene Buchse (6) aufweist, in die eines der Teile der Schaltwelle drehfest eingesetzt ist, und das an geeigneten Stellen und in geeigneter Weise mit Falten (18, 20) derart versehen ist, daß das Formteil zu einer zumindest partiellen Drehbewegung befähigt ist, wobei dieses Formteil aus einem zylinderförmigen Balg (1d, 1e) besteht dadurch gekennzeichnet,

daß das Formteil (1d) in seinem oberen Abschnitt sternförmig um die Zylinderachse angeordnete Längsfalten (17) und im unteren Abschnitt Querfalten (18) oder daß das Formteil (1e) um die Zylinderachse wendelförmig angeordnete Falten (20) aufweist.

8. Abdichtung nach Anspruch 7, dadurch gekennzeichnet, daß das Formteil (1d, 1e) aus einem Fluorkunststoff hergestellt ist.

## Claims

1. Glandless sealing of a rotary armature provided with a switch shaft (16) comprising two parts, the rotary fixture comprising a resilient liquid-tight moulding (1a, 1b, 1c) shaped to be circular in plan view, which has an edge (7) which is clamped in between two flanges (8, 9) of the housing, which has a closed bushing (6) into which one of the parts of the switch shaft is non-rotatably inserted, and which is provided at suitable points and in suitable manner with folds (12, 13, 15, 19) such that the moulding is made capable of an at least partial rotary movement, characterized in that the moulding comprises a membrane (1a, 1b, 1c), and in that the folds (12, 13, 15, 19) are arranged in the radial direction between the bushing (6) and the clamped edge (7).

2. Sealing according to Claim 1, characterized in that this moulding (1a, 1b, 1c) is produced from a fluoroplastics.

3. Sealing according to one of Claims 1 or 2, characterized in that the moulding (1a or 1c) has wave-shaped folds (12 or 19 respectively).

4. Sealing according to Claim 3, characterized in that a pin (4) of an eccentric switch part (2) of the switch shaft (16) is inserted in this bushing (6).

5. Sealing according to Claim 3, characterized in that the folds (19) are arranged in the form of a spiral in plan view.

6. Sealing according to Claim 2, characterized in that the moulding (1b) has folds (13) which are star-shaped in plan view and an outer annular fold (15).

7. Glandless sealing of a rotary fixture provided with a switch shaft (16) comprising two parts, the rotary fixture comprising a resilient liquid-tight moulding (1d, 1e) shaped to be circular in plan view, which has an edge (7) which is clamped in between two flanges (8, 9) of the housing, which has a closed bushing (6) into which one of the parts of the switch shaft is non-rotatably inserted, and which is provided at suitable points and in suitable manner with folds (18, 20) such that the moulding is made capable of an at least partial rotary movement, this moulding comprising a cylindrical diaphragm (1d, 1e), characterized in that the moulding (1d) has in its upper section longitudinal folds (17) arranged in a star shape around the cylinder axis and has in the lower section transverse folds (18), or in that the moulding (1e) has folds (20) arranged in a helix shape around the cylinder axis.

8. Sealing according to Claim 7, characterized in that the moulding (1d, 1e) is produced from a fluoroplastics.

**Revendications**

1. Etanchéité sans presse-étoupe pour une vanne tournante munie d'un axe de commande (16) en deux parties, composée d'un élément moulé (1a, 1b, 1c) élastique étanche aux liquides, de forme circulaire en vue de dessus, qui comporte un bord (7) serré entre deux brides (8, 9) du corps, qui présente un logement (6) fermé, à l'intérieur duquel l'une des parties de l'axe de commande est montée fixe en rotation et qui est muni de plis (12, 13, 15, 19) adaptés, de manière telle que l'élément moulé puisse au moins effectuer un mouvement de rotation partiel, caractérisé en ce que
   - l'élément moulé se compose d'une membrane (1a, 1b, 1c),
   - les plis (12, 13, 15, 19) sont disposés radialement entre le logement (6) et le bord (7) serré.

2. Etanchéité selon la revendication 1 caractérisée en ce que ledit élément moulé (1a, 1b, 1c) est réalisé en une matière plastique fluorée.

3. Etanchéité selon l'une des revendications 1 ou 2 caractérisée en ce que l'élément moulé (1a ou 1c) présente des plis (12 ou 13) en forme d'ondes.

4. Etanchéité selon la revendication 3 caractérisée en ce qu'un tourillon (4) d'une partie de commande (2) excentrique de l'axe de commande est monté dans ledit logement (6).

5. Etanchéité selon la revendication 3 caractérisée en ce que les plis (19) sont disposés en forme de spirale en vue de dessus.

6. Etanchéité selon la revendication 2 caractérisée en ce que l'élément moulé (1b) présente, en vue de dessus, des plis (13) en étoile, ainsi qu'un pli annulaire (15) extérieur.

7. Etanchéité sans presse-étoupe pour une vanne tournante munie d'un axe de commande (16) en deux parties, composée d'un élément moulé (1d, 1e) élastique étanche aux liquides, de forme circulaire en vue de dessus, qui comporte un bord (7) serré entre deux brides (8, 9) du corps, qui présente un logement (6) fermé, à l'intérieur duquel l'une des parties de l'axe de commande est montée fixe en rotation et qui est muni de plis (18, 20) adaptés, de manière telle que l'élément moulé puisse au moins effectuer un mouvement de rotation partiel, ledit élément moulé étant formé d'un soufflet (1d, 1e) cylindrique, caractérisé en ce que
   l'élément moulé (1d) présente dans sa partie supérieure des plis longitudinaux (17) disposés en étoile autour de l'axe du cylindre, et dans sa partie inférieure des plis transversaux (18) ou en, ce que l'élément moulé (1e) présente des plis (20) disposés en hélice autour de l'axe du cylindre.

8. Etanchéité selon la revendication 7 caractérisée en ce que l'élément moulé (1d, 1e) est réalisé en une matière plastique fluorée.

Fig1

Schnitt nach
G-G

Fig. 2

Schnitt nach
A-F

Fig. 3

7

# Draufsicht auf C-C

Fig.4

EP 0 278 417 B1

Schnitt nach A-A

Fig. 5

Schnitt nach B-B

Fig. 6

Schnitt nach A-A

Fig.7

EP 0 278 417 B1

Draufsicht nach B-B

Fig. 8

19

1c

A

A

EP 0 278 417 B1

## Schnitt nach A-A

16

10

8

7

B | | B

9

17

18

1d

6

Fig. 9

11

## Draufsicht nach B-B

17

1d

A

A

Fig. 10

Fig. 11

Fig. 12